# EUROPEAN PATENT SPECIFICATION

(11) **EP 3 378 175 B1**
(45) Date of publication and mention of the grant of the patent: **02.10.2019**
(21) Application number: 16819654.1
(22) Date of filing: 18.11.2016
(51) Int. Cl.: H04B 10/50, H04B 10/272

(54) **OPTICAL LINE TERMINAL AND OPTICAL NETWORK UNIT IN A TWDM-PON SYSTEM**
OPTICAL-LINE-SENDGERÄT UND OPTISCHE NETZWERKEINHEIT
OPTICAL LINE TERMINAL AND OPTICAL NETWORK UNIT

(30) Priority: 20.11.2015 CN 201510815714
(43) Date of publication of application: 26.09.2018
(73) Proprietor: Alcatel Lucent, 91620 Nozay (FR)
(72) Inventor: GAO, Zhensen, Shanghai 201206 (CN)
(74) Representative: Louis Pöhlau Lohrentz
(86) International application number: PCT/IB2016/001804
(87) International publication number: WO 2017/085560

(56) References cited:
- US-A1- 2014 119 395
- LEE HAN HYUB ET AL: "Investigation of ONU power leveling method for mitigating inter-channel crosstalk in TWDM-PONs", 2014 12TH INTERNATIONAL CONFERENCE ON OPTICAL INTERNET 2014 (COIN), IEEE, 27 August 2014 (2014-08-27), pages 1-2, XP032678150, DOI: 10.1109/COIN.2014.6950574 [retrieved on 2014-11-07]
- HAL ROBERTS CALIX NETWORKS USA: "Additional note on Maximum Spectral Excursion for G.989.2 (amendment) revised;C", ITU-T DRAFT ; STUDY PERIOD 2013-2016, INTERNATIONAL TELECOMMUNICATION UNION, GENEVA ; CH, vol. 2/15, 13 April 2015 (2015-04-13), pages 1-6, XP044129431, [retrieved on 2015-04-13]
- GUO YONG ET AL: "Demonstration of a symmetric 40 Gbit/s TWDM-PON over 40 km passive reach using 10 G burst-mode DML and EDC for upstream transmission [invited]", JOURNAL OF OPTICAL COMMUNICATIONS AND NETWORKING, INSTITUTE OF ELECTRICAL AND ELECTRONICS ENGINEERS, US, vol. 7, no. 3, 1 March 2015 (2015-03-01), XP011575942, ISSN: 1943-0620, DOI: 10.1364/JOCN.7.00A363 [retrieved on 2015-03-18]

## Description

### TECHNOLOGY

The embodiments of the present disclosure relate to Time- and Wavelength-Division Multiplexed Passive Optical Network (TWDM-PON) system, and particularly to an optical line terminal (OLT) and an optical network unit (ONU) in a TWDM-PON system.

### BACKGROUND

TWDM-PON has been recently selected as the primary technology for NG-PON2 by the ITU-T community due to its cost effectiveness and backward compatibility with the legacy GPON/XGPON. In the initial stage, TWDM-PON targets to offer an aggregate capacity of 40Gbp/s in the downlink and 10Gbp/s in the uplink by multiplexing four wavelength channel pairs, where each wavelength pair is modulated at 2.5Gb/s for the uplink, and 10Gb/s for the downlink.

However, in order to satisfy the demand of future bandwidth consuming services, it becomes necessary for future TWDM-PON to provide 10Gbp/s per wavelength in the uplink to realize a 40Gbp/s symmetric TWDM-PON. Additionally, in the specification ITU-T G.989.2 for TWDM-PON, it is also desirable that the transmission distance between the OLT and ONU is larger than 40km and the splitting ratio is not less than 1:64. The ONU uplink transmitter is the key technology to meet these requirements in a symmetric TWDM-PON system.

Traditionally, the external modulation such as the Mach-Zehnder (MZM) modulator or electro-absorption modulator (EML) is the candidate approach for a long reach transmission with 10Gb/s per uplink wavelength channel. But these modulators are either polarization sensitive or quite expensive for practical use in TWDM-PON. Compared with the abovementioned transmitters, a directly modulated laser (DML), such as a distributed feedback laser (DFB laser), is a very attractive candidate for TWDM-PON as it is tunable and of low cost.

However, most of the commercial DMLs are operated at 2.5Gb/s, so the 2.5Gb/s DMLs of four stacked uplink multiple wavelength optical signals can only generate a 10Gb/s uplink capacity for a symmetric TWDM-PON. It is very hard to directly use a low speed 2.5Gb/s DML to generate high speed 10Gb/s uplink signals for a symmetric 40Gb/s TWDM-PON system due to its low modulation efficiency, a pulse spreading induced by the strong frequency chirp and the transmission performance deterioration.

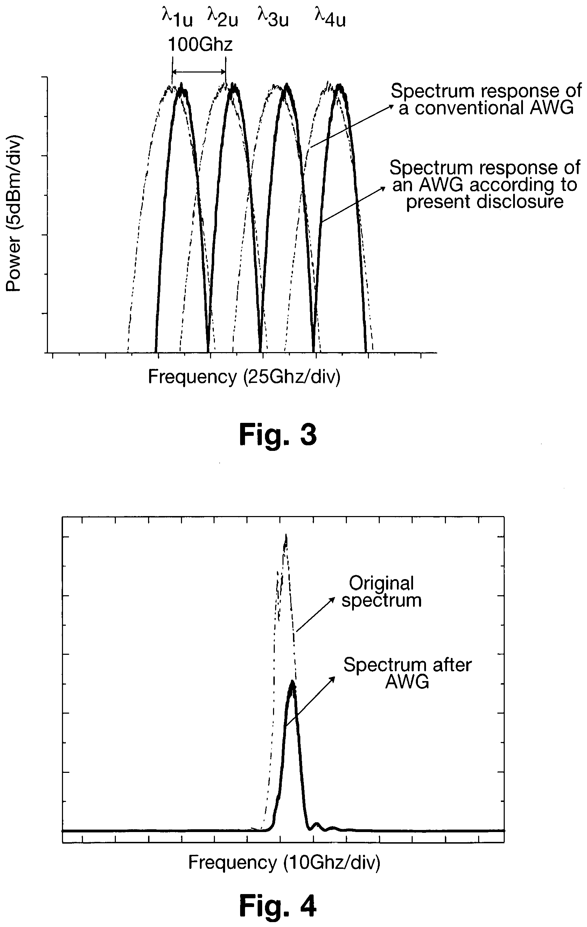

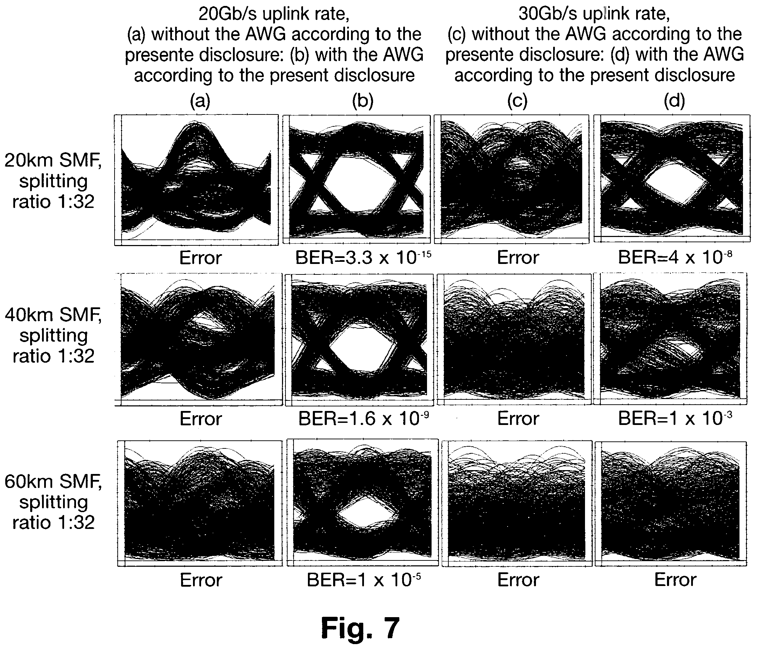

Intuitively, a high speed 10Gb/s DML can be used for a 10Gb/s uplink signal transmission to realize a symmetric 40Gb/s TWDM-PON system. But its cost is about 2∼3 times than the price of a 2.5Gb/s DML. What's more, a 10Gb/s DML also severely suffers from the frequency chirp. The transmission distance for a typical 10Gb/s DML is limited to <20 km and the splitting ratio in the PON system is greatly reduced, which is incompatible with the NG-PON2 requirement. Since the TWDM-PON is very cost sensitive, it is attractive but very challenging to use a commercial low speed 2.5Gb/s DML to transmit 10Gb/s uplink signals over a fiber, which is longer than 40km for example, to realize a long reach 40Gb/s symmetric TWDM-PON system with a high splitting ratio. US 2014/119395 A1 discloses a transmitter for an optical network unit (see Fig. 3 and page 3, [0035]), comprising: a direct modulation laser, for generating an uplink optical signal where the bias current is configured to be at a threshold current of the direct modulation laser, and an amplitude of the modulation current is configured to be at a threshold level. LEE HAN HYUB ET AL: "Investigation of ONU power levelling method for mitigating inter-channel crosstalk in TWDM-PONs", 2014 12TH INTERNATIONAL CONFERENCE ON OPTICAL INTERNET 2014 (COIN), IEEE, 27 August 2014 (2014-08-27), pages 1-2, DOI: 10.1109/ COIN.2014.6950574, investigates ONU power levelling (see abstract and II. EXPERIMENTAL) for mitigating Inter-channel crosstalk of upstream signals in TWDM-PON achieving a 6 dB power dynamic range with maximum 1.4 dB power penalty by adjusting the operation current of a directly modulated 2.5 Gb/s GPON ONU transmitter. Maintaining a value of Extinction Ratio, ER, with around 8.5 dB, the bias and modulation currents of the transmitter are fine tuned. HAL ROBERTS CALIX NETWORKS USA: "Additional note on Maximum Spectral Excursion for G.989.2 (amendment) revised;C", ITU-T DRAFT ; STUDY PERIOD 2013-2016, INTERNATIONAL TELECOMMUNICATION UNION, GENEVA ; CH, vol. 2/15, 13 April 2015 (2015-04-13), pages 1-6, relates to Maximum Spectral Excursion for ITU G.989.2 focusing on laser calibration precision offsetting the DML laser to obtain ER benefit (see Figures 4 to 6 and corresponding disclosure). D3 concludes that to avoid a deterioration in the receiver sensitivity, it is better to align the spectrum to the peak NRZ 'ones' and even bias the laser peak to a small negative offset. In order to allow this within the standard it is proposed that the DML filter spectral width in MSE is defined such that the peak of the NRZ 'zeros' can be ignored (see Fig. 7). GUO YONG ET AL: "Demonstration of a symmetric 40 Gbit/s TWDM-PON over 40 km passive reach using 10 G burst-mode DML and EDC for upstream transmission [invited]", JOURNAL OF OPTICAL COMMUNICATIONS AND NETWORKING, INSTITUTE OF ELECTRICAL AND ELECTRONICS ENGINEERS, US, vol. 7, no. 3, 1 March 2015 (2015-03-01), ISSN: 1943-0620, DOI: 10.1364/JOCN.7.00A363, discloses a symmetric 40 Gb/s TWDM-PON over 40 km passive reach using 10 G burst-mode DML and electronic dispersion compensation, EDC, for upstream transmission (see abstract and Fig. 4). At the ONU side a 10 G DML is implemented by employing a directly modulated DFB laser. A burst-mode 10 G EDC is then employed to mitigate the dispersion penalty induced by the chromatic dispersion and extended spectrum of DML transmit transient chirp.

### SUMMARY

In view of the existing technical problem in the prior art, the embodiment of the present disclosure provides a symmetric TWDM-PON system with an extended transmission distance (>40km, for example) and a high splitting ratio (>1:64, for example). Further, in this system, a very low speed and low cost 2.5Gb/s DML laser is used.

According to a first aspect of the present disclosure, it is proposed a transmitter for an optical network unit, comprising: a 2.5Gb/s direct modulation laser, for generating an uplink optical signal; wherein the direct modulation laser is driven by a modulation current and a bias current, and the bias current is configured to be greater than a threshold current of the direct modulation laser, and an amplitude of the modulation current is configured such that a difference between a frequency of 1 bit and a frequency of 0 bit of the uplink optical signal is a half of a transmission rate of the uplink optical signal.

According to an embodiment of the present disclosure, the direct modulation laser comprises a distributed feedback laser or a distributed Bragg reflector.

According to an embodiment of the present disclosure, the bias current is configured to be at least three times of the threshold current of the direct modulation laser.

According to an embodiment of the present disclosure, the bias current is configured to be three to five times of the threshold current of the direct modulation laser.

According to an embodiment of the present disclosure, data carried by the modulation current is in an On-Off Keying format.

According to an embodiment of the present disclosure, the amplitude of the modulation current is configured based on physical parameters of the direct modulation laser.

According to a second aspect of the present disclosure, it is proposed a receiver for an optical line terminal, comprising: an arrayed waveguide grating; and N receiving units; wherein the arrayed waveguide grating is used to equalize an uplink optical signal, and transmit N uplink multiple wavelength optical signals to the N receiving units respectively, wherein the uplink optical signal is generated by a 2.5Gb/s direct modulation laser; and wherein a center frequency of each of N pass-bands of the arrayed waveguide grating has an offset with respect to a frequency of a corresponding uplink multiple wavelength signal, and a 3dB bandwidth of each of the N pass-bands of the arrayed waveguide grating is in a range of 17GHz to 33GHz.

According to an embodiment of the present disclosure, the 3dB bandwidth of each of the N pass-bands of the arrayed waveguide grating is 25GHz.

According to an embodiment of the present disclosure, the offset between the center frequency of each of the N pass-bands of the arrayed waveguide grating and the frequency of the corresponding uplink multiple wavelength optical signal is in a range of 25GHz to 35GHz.

According to an embodiment of the present disclosure, the offset is 30GHz.

According to an embodiment of the present disclosure, N equals to 4 or 8.

According to an embodiment of the present disclosure, an order of a filter of each of the N pass-bands of the arrayed waveguide grating is at least 2.

According to an embodiment of the present disclosure, the receiver further comprises: an optical amplifier for amplifying the uplink optical signal and outputting it to the arrayed waveguide grating.

According to an embodiment of the present disclosure, the direct modulation laser is driven by a modulation current and a bias current, and the bias current is configured to be greater than a threshold current of the direct modulation laser, and an amplitude of the modulation current is configured such that a difference between a frequency of 1 bit and a frequency of 0 bit of the uplink optical signal is a half of a transmission rate of the uplink optical signal.

According to a third aspect of the present disclosure, it is proposed an optical network unit, comprising: a transmitter according to the present disclosure; a receiver; and a wavelength division multiplexer connected with the transmitter and the receiver respectively.

According to a fourth aspect of the present disclosure, it is proposed an optical line terminal, comprising: a receiver according to the present disclosure; a transmitter; and a wavelength division multiplexer connected with the transmitter and the receiver respectively.

According to a fifth aspect of the present disclosure, it is proposed an optical network architecture, comprising: N optical network units according to the present disclosure; a splitter; and an optical line terminal according to the present disclosure; wherein the optical line terminal is connected with the N optical network units via the splitter.

Herein, the embodiment of the present disclosure provides a new scheme for a symmetric TWDM-PON system with an extended transmission distance, which uses a very low speed and low cost 2.5Gb/s DML as a transmitter. The advantages of the embodiments of the present disclosure are at least in that:
1. A 10Gb/s high speed uplink data transmission is accomplished by using a low cost and low speed 2.5Gb/s DML as a transmitter to realize a long reach 40Gb/s symmetric TWDM-PON. Herein, no high speed and expensive optical transmitter is required to be installed at the optical network unit.
2. Moreover, the embodiments of the present application can further support ever higher transmission speed above 10Gb/s such as 20Gb/s. For example, a low speed 2.5Gb/s DML can be used for a 80Gb/s symmetric TWDM-PON.
3. A single arrayed waveguide grating (AWG) is used at the OLT to simultaneously perform dual-functions of wavelength demultiplexing and optical equalization to extend the transmission distance and thus enhance the splitting ratio in the long reach symmetric TWDM-PON system.
4. The transmission performance of multiple uplink wavelength optical signals at the OLT for the long reach PON is centralized improved.
5. Metro-access convergence for a future access network evolution is enabled.
6. The optical distribution network (ODN) remains passive and no active components are introduced in the remote node for the long reach symmetric TWDM-PON.

The respective aspects of the embodiments of the disclosure will be clear through the illustration of the detailed embodiments below.

### BRIEF DESCRIPTION OF THE DRAWINGS

Other features, objects and advantages of the invention will become more apparent upon review of the following detailed description of non-limiting embodiments taken with reference to the drawings in which:
Figure 1 illustrates a network architecture of a symmetric TWDM-PON system according to an embodiment of the present disclosure;
Figure 2 illustrates the relationship between a spectrum response of a conventional AWG according to an embodiment of the present disclosure, a spectrum response of an AWG according to an embodiment of the present disclosure and multiple wavelength optical signals;
Figure 3 illustrates a spectrum response of a conventional AWG according to another embodiment of the present disclosure and a spectrum response of an AWG according to an embodiment of the present disclosure;
Figure 4 illustrates the spectrums of the uplink optical signal before and after the AWG according to an embodiment of the present disclosure;
Figure 5 illustrates the waveforms of the uplink optical signal before and after the AWG according to a further embodiment of the present disclosure;
Figures 6(a) to 6(i) illustrate eye diagrams and BER diagrams under the respective condition when the bit rate is 10Gb/s according to an embodiment of the present disclosure; and
Figure 7 illustrates eye diagrams and BER diagrams under the respective condition when the bit rate is 20Gb/s and 30Gb/s according to an embodiment of the present disclosure.
In the drawings, identical or like reference numerals denote identical or corresponding components or features throughout the different figures.

### DETAILED DESCRIPTION

The basic idea of the embodiments of the disclosure is in that:
1. Unlike the traditional concept of using a high speed transmitter for a high speed uplink transmission, only a low speed and low cost 2.5Gb/s DML is used at the ONU transmitter side to transmit 10Gb/s or even above uplink Non-Return to Zero On-Off Keying (NRZ-OOK) (i.e. a binary optical intensity modulation format) optical signals for a 40Gb/s or beyond symmetric TWDM-PON system. No any high speed optical component is used at the ONU so as to save the cost.
2. In the prior art, the bias current of the DML is near the threshold current of the DML and the conventional laser is modulated with a current with a high amplitude, which carries the data, to get a high extinction ratio. By contrast, in the embodiments of the present disclosure, the low speed 2.5Gb/s DML is driven by a higher bias current, and modulated with a relatively small modulation current, which carries the data. The bias current is selected to be several times (at least 3 times, for example) of the threshold current to boost the output power and enhance the resonance frequency. Moreover, the modulation current is properly optimized according to the DML physical parameters to induce a frequency chirp of about a half of the bit rate.
3. At the OLT receiver side, a special AWG according to the embodiment of the present disclosure is used. This AWG is used not only as a wavelength de-multiplexer but also as an optical equalizer to centrally improve the transmission performance of the distorted high speed uplink NRZ-OOK signal. The 3dB bandwidth and center frequency of the special AWG are different from those of the traditional AWG. In the AWG according to the embodiment of the present disclosure, the center frequency of each pass-band is no longer precisely aligned with the corresponding uplink wavelength, but is blue or red shifted by about one thirds of the channel spacing to perform optical equalization. Further, according to an embodiment of the present disclosure, the 3dB bandwidth of each pass-band is selected to be about half of the conventional AWG.
4. The specially designed AWG at the OLT side can simultaneously perform optical equalization for multiple uplink wavelength channels to improve the transmission performance of the high speed (10Gb/s, for example) uplink optical signal which is generated by the low speed 2.5Gb/s DML. The cost of the AWG according to the embodiment of the present disclosure can be shared by all the ONUs, so the cost of each ONU is maintained to be very low whilst the uplink bit rate for each ONU can be increased to 10Gb/s, for example, without resorting to a high speed and expensive transmitter.
5. Reach extension and splitting ratio enhancement can be achieved in the TWDM-PON system by using the embodiments in the present disclosure. In the following, 60km single mode fiber (SMF) transmission and 1:64 splitting ratio have been successfully validated for a 40Gb/s symmetric TWDM-PON system using a low speed 2.5Gb/s DML.

In the following, the embodiments of the present disclosure will be introduced. It should be understood, the embodiments disclosed herein are not limited to the four wavelength channels (i.e., N=4) for a 40Gbs/s TWDM-PON disclosed in the following, and the uplink transmission rate of a single ONU is not limited to 10Gb/s. For example, the principle of the embodiments of the present disclosure can also be extended to 8 channels or more for a 80Gb/s or beyond symmetric TWDM-PON.

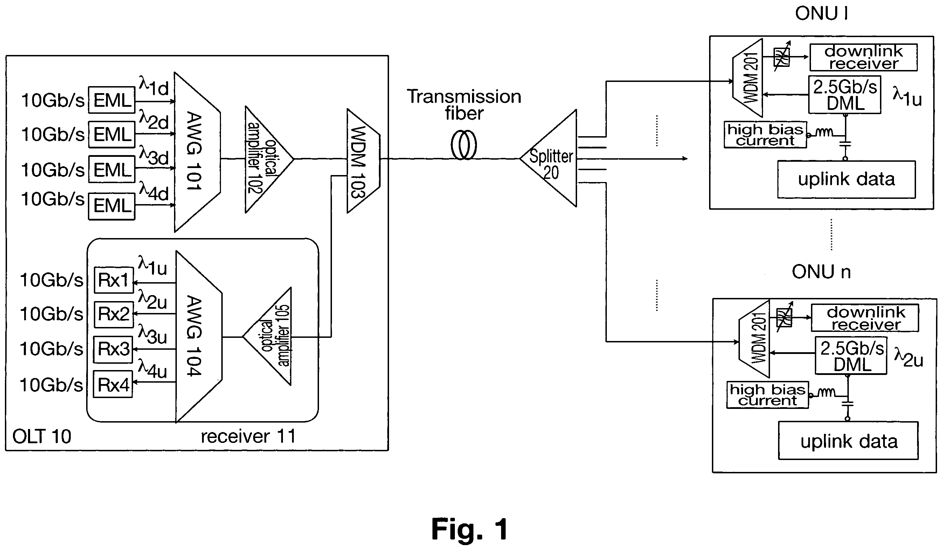

Figure 1 illustrates a network architecture of a symmetric TWDM-PON system according to an embodiment of the present disclosure.

As shown in Fig.1, the network architecture includes an OLT 10, a splitter 20 and multiple ONU 1...n. Those ONU are connected with an OLT 10 via a transmission fiber through a splitter 20. Herein, the transmission distance is very long, longer than 20km, for example.

### a) Generation and reception of a 40Gb/s downlink optical signal

Herein, the downlink direction (i.e., OLT to ONU direction) is described firstly.

In the downlink direction, the architectures of the transmitter of the OLT and the receiver of the ONU are similar as those of the conventional TWDM-PON system. As shown in Fig.1, at the OLT side, the transmitter comprises four electro-absorption modulated lasers (EML) and AWG 101. Each EML can be used to independently generate four downlink wavelengths λ_{1d}, λ_{2d}, λ_{3d}, λ_{4d}. Herein, each wavelength is modulated at 10Gb/s to generate the aggregate 40Gb/s downlink capacity. Although the cost of each EML is about twice of the DML, it exhibits a superior transmission performance over a long distance single mode fiber (SMF) than the DML at 10Gb/s. The total cost of the EML can be shared by all the ONUs, so it is acceptable to employ EML at the OLT side.

Further, a conventional AWG 101 with 100GHz channel spacing and 3dB bandwidth of ∼50GHz can be used to multiplex the four wavelengths. Thus, the downlink multiple wavelength optical signals generated by the EMLs can be multiplexed to a downlink optical signal. Herein, the central wavelength of each AWG pass-band is aligned with the emission wavelength of the corresponding EML. To guarantee the power budget which depends on the splitting ratio and length of a single mode fiber (SMF), an optical amplifier 102 can be further used after the AWG 101 to compensate the loss in advance.

Herein, only one example of the transmitter at the OLT side is shown. It is appreciated for those skilled in the art that any other types of the transmitter in the prior art can also be applied.

Further, as shown in Fig.1, an ONU (ONU 1, for example) includes a corresponding receiver to receive the downlink optical signal. This receiver can be constructed according to any suitable technology in the art. Further, the ONU further includes a wavelength division multiplexer 201 and a transmitter (discussed below). The wavelength division multiplexer 201 will be used to multiplex and de-multiplex the uplink optical signal and downlink optical signal.

### b) Generation and reception of a symmetric 40Gb/s uplink optical signal

The optical signal transmission in the uplink direction will be introduced in the following according to the principal of the embodiments of the present disclosure.

In the uplink direction, the scheme of the embodiments of the present disclosure can be used to generate a 40Gb/s uplink optical signal which is symmetric with the downlink. At the ONU transmitter side, instead of using an expensive EML, only a low cost and low speed 2.5Gb/s bandwidth-limited DML is used. In one example of the present disclosure, the 2.5Gb/s DML for each ONU is modulated with a high speed 10Gb/s NRZ-OOK uplink data (It should be noted that the embodiments of the present disclosure are also possible to support ever higher transmission speed above 10Gb/s, such as 20Gb/s using only a low speed 2.5Gb/s DML for a 80Gb/s symmetric TWDM-PON). Herein, the 10Gb/s uplink data is used only as an example for a 40Gb/s symmetric TWDM-PON. Further, the modulation current can be selected properly according to the DML parameters.

At the OLT receiver 11, the receiver 11 can optionally include an optical amplifier 100 depending on the uplink power budget requirement. Herein, a special AWG 104 according to an embodiment of the present disclosure will be used to simultaneously perform wavelength de-multiplexing and optical equalization, so as to recover the distorted uplink 10Gb/s NRZ-OOK signal for each wavelength channel. The 3dB bandwidth and the center frequency of the special AWG are both different from those of the conventional AWG (e.g. the AWG 101 in the OLT transmitter for downlink transmission).

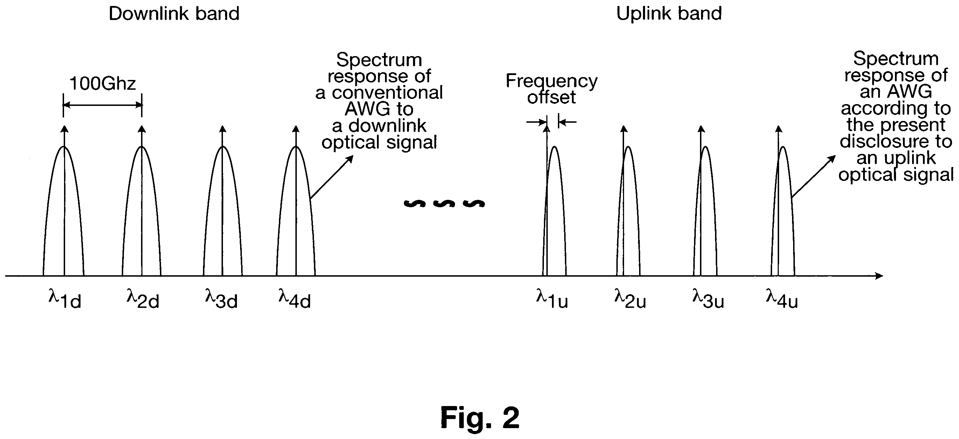

As illustrated in the right of Fig.2, compared with the conventional AWG (The spectrum response of the AWG 101 is illustrated in the left of Fig.2), the 3dB bandwidth of the AWG according to the embodiment of the present disclosure is much narrower, and there is a frequency offset between the center frequency of each AWG pass-band and the corresponding uplink wavelengths λ₁ᵤ, λ₂ᵤ, λ₃ᵤ, λ₄ᵤ. The principle and construction of the ONU transmitter and the receiver in the OLT will be discussed as below.
- ONU uplink transmitter using a low speed 2.5Gb/s DML

As shown in Fig.1, the ONU uplink transmitter includes a low speed 2.5Gb/s tunable DML, for generating the uplink optical signal.

Advantageously, the tunable DML could be a DFB or DBR laser.

According to an embodiment of the present disclosure, the modulation current with a high speed 10Gb/s uplink NRZ-OOK data is combined with a high bias current to drive the 2.5GHz DML.

This driving condition is different from the conventional DML operation. In the conventional DML operation, the bias current is near the threshold current of the DML, and a high modulation current is applied to get a high extinction ratio.

By contrast, in the embodiments of the disclosure, the bias current of each DML is set as greater than the threshold current (several times as the threshold current, for example) to produce a high output power and enhance the resonance frequency of the DML. Advantageously, the bias current is configured as at least three times of the threshold current of the DML. More advantageously, the bias current is configured as three to five times of the threshold current of the DML. Of course, the above bias current should be lower than the breakdown current of the DML.

Further, the peak modulation current of the 10Gb/s uplink NRZ-OOK data is relatively small and the amplitude of the modulation current should be properly selected such that a difference between a frequency of 1 bit and a frequency of 0 bit of the uplink optical signal is a half of a transmission rate (10Gb/s in this embodiment) of the uplink optical signal.

In practice, the amplitude of the modulation current should be also configured according to DML physical parameters. Those physical parameters include nonlinear gain compression, linewidth enhancement factor, confinement factor, volume, quantum efficiency and etc.

As an example, a distributed feedback laser with a multi-quantum-well active layer is used in the following for illustration. The threshold current of the DFB laser is ∼21mA. Table 1 illustrates the physical parameters of the 2.5Gb/s DML. A bias current of 80mA and a modulation current of 20mA are selected as per the above rules to modulate the 10Gb/s uplink NRZ-OOK data onto the 2.5Gb/s DML.

**Table 1**

| Parameter | value | Unit |
|---|---|---|
| Wavelength | 1550 | nm |
| Confinement factor | 0.1 | / |
| Carrier density at transparency | 1.8^{∗}10¹⁸ | cm⁻³ |
| Gain compression factor | 4.5^{∗}10⁻¹⁷ | cm³ |
| Photon lifetime | 1.367 | ps |
| Electron lifetime | 0.66 | ns |
| Spontaneous emission factor | 10⁻⁴ | / |
| Active region volume | 3^{∗}10⁻¹¹ | cm⁻³ |
| Group velocity | 7.494^{∗}10⁹ | cm/s |
| Gain constant | 7^{∗}10⁻¹⁶ | cm² |
| Differential quantum efficiency | 0.1945 | / |
| Linewidth enhancement factor | 3.3 | / |

- OLT receiver structure with an AWG according to an embodiment of the present disclosure

As shown in Fig.1, the receiver 11 in the OLT includes an AWG 104 according an embodiment of the present disclosure and N receiving units (N=4 in Fig.1). Advantageously, the receiver 11 further includes an optical amplifier for amplifying the uplink optical signal and outputting it to the AWG 104.

The uplink 10Gb/s NRZ-OOK optical signal for each ONU is combined by the splitter and transmitted over a long distance before arriving at the OLT. Due to the large chromatic dispersion introduced by the SMF, the uplink 10Gb/s optical signal generated by the 2.5GHz band-limited DML will be greatly distorted.

According to an embodiment of the present disclosure, at the OLT receiver, the AWG 104 de-multiplexes the uplink optical signal to multiple uplink multiple wavelength signals (four uplink multiple wavelength signals in Fig.1), and equalize the uplink optical signal in the meantime. After then, the AWG 104 outputs the respective uplink multiple wavelength signal to the corresponding receiving unit. Herein, the AWG 104 is able to perform optical equalization for all the four uplink wavelength channels. Thus, the AWG 104 according to the embodiment of the present disclosure is different from the conventional one.

The 3dB bandwidth of each pass-band for the AWG 104 according to the embodiment of the present disclosure is set around half of that of the conventional AWG. Compared with the corresponding uplink wavelength channel λ₁ᵤ, λ₂ᵤ, λ₃ᵤ, λ₄ᵤ, the corresponding center frequency of the AWG is blue or red shifted by about one thirds of the channel spacing, thereby generating offset with respect to the frequency of the corresponding uplink multiple wavelength optical signal.

Advantageously, the offset is in a range of 25GHz to 35GHz. More advantageously, the offset is 30GHz.

In one embodiment of the present disclosure, the bandwidth of the N pass-bands of the AWG 104 is located in the range of 17GHz to 33GHz respectively. More advantageously, the bandwidth of the N pass-bands of the AWG 104 is 25GHz.

Figure 3 illustrates a spectrum response of a conventional AWG according to another embodiment of the present disclosure and a spectrum response of an AWG according to an embodiment of the present disclosure. As shown in Fig.3, the 3dB bandwidth of the AWG is ∼25GHz, which is lower than 50GHz 3dB bandwidth of the conventional AWG. Further, the center frequency has a frequency offset with respect to the uplink wavelength by around 30 GHz. Through the specially designed AWG 104, the transmission performance of the uplink 10Gb/s NRZ optical signal generated by a low speed 2.5Gb/s DML can be greatly improved. Through the above configuration, it can be guaranteed that BER after a long distance fiber (60km, for example) is still within the correction range 10^{^(-3)} of the forward error correction.

Further, according to an embodiment of the present disclosure, an order of a filter of each of the N pass-bands of the AWG 104 is at least 2.

Figure 4 illustrates the spectrums of the uplink optical signal before and after the AWG according to an embodiment of the present disclosure. Since the center frequency of the AWG is shifted, the output spectrum has been reshaped. The blue part of the spectrum of each uplink multiple wavelength optical signal has been slightly cut-off, while the red part is maintained. Thanks to the spectrum reshaping, the uplink 10Gb/s optical signal has been regenerated precisely.

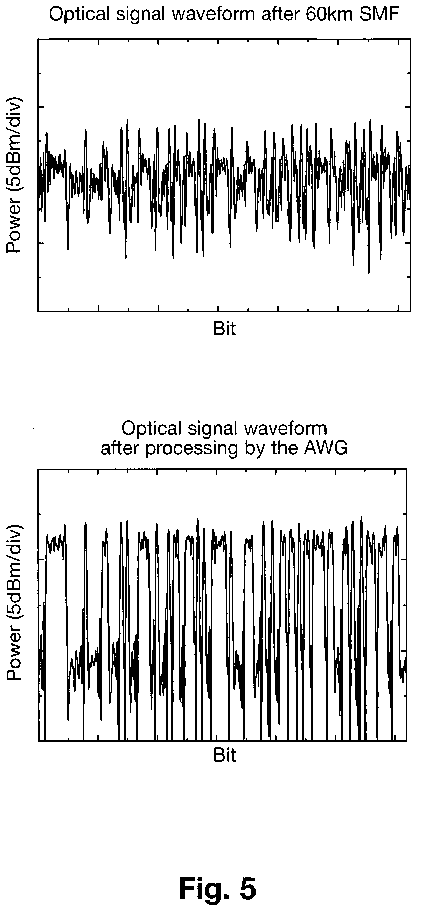

As shown in the left of Fig.5, the waveform after 60km SMF transmission has been greatly distorted and fully submerged under the noise. However, after the process by the AWG 104 according to the embodiment of the present disclosure, the 10Gb/s uplink optical signal has been successfully recovered, as shown in the right of Fig.5.

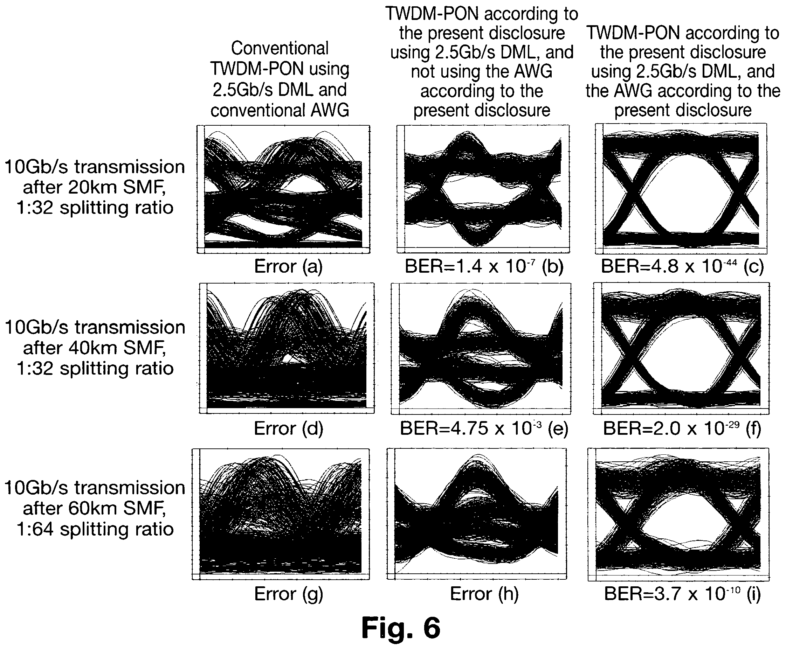

Figures 6(a) to 6(i) illustrate eye diagrams and BER diagrams under the respective condition when the bit rate is 10Gb/s according to an embodiment of the present disclosure. It should be noted that no any optical amplifier is used throughout those simulation. Figs 6(a) to 6(i) illustrate the transmission performance for different transmission distance and splitting ratio condition.

As shown in Fig.6(a), in the case of 20km SMF transmission and 1:32 splitting ratio, the eye diagram of 10Gb/s NRZ signals is substantially closed for the conventional TWDM-PON using a 2.5Gb/s DML. Herein, the 2.5Gb/s DML is driven by the bias current near the threshold current and a modulation current with a higher amplitude. In this situation, no bit-error-ratio (BER) can be measured.

However, as shown in Fig.6(b), under the same condition, the symmetric TWDM-PON system proposed according to the embodiment of the present disclosure is used, which is configured with a DML transmitter driven with a high bias current and a modulation current with a lower amplitude, and the AWG according to the embodiment of the present disclosure is not used at the OLT receiver side. As shown in Fig.6(b), in this case, the eye diagram is partially open with a BER 1.4×10⁻⁷. Further, in Fig.6(c), the AWG according to an embodiment of the present disclosure is used at the OLT receiver side. It is clear that BER is significantly reduced to 4.8×10⁻⁴⁴ under the same condition.

For comparison, Figs 6(d) to 6(f) illustrate the transmission performance of 10Gb/s NRZ signal when the transmission distance is extended to 40km for a splitting ratio of 1:32.

As shown in Fig.6(d), the eye diagram for the 10Gb/s NRZ signal when a conventional TWDM-PON employs the 2.5Gb/s DML is severely closed. Herein, the 2.5Gb/s DML is driven by the bias current near the threshold current and a modulation current with a higher amplitude. In this situation, no BER can be measured.

However, as shown in Fig. 6(e), under the same condition, the symmetric TWDM-PON system proposed according to the embodiment of the present disclosure is used. The TWDM-PON is configured at the ONU side with a DML transmitter driven by a high bias current and a modulation current with a lower amplitude, and no AWG according to the embodiment of the present disclosure is used at the receiver of the OLT. As shown in Fig. 6(e), in this case, the transmission performance is slighted degraded, and the BER is 4.75×10⁻³. Further, in Fig. 6(c), an AWG according to the embodiment of the present disclosure is used at the side of the receiver of the OLT, it can be clearly seen that the BER is significantly reduce to 2×10⁻²⁹ under the same condition. Herein, the eye diagram is still clearly open. Thus, the scheme according to the embodiment of the disclosure can accomplish a reliable long distance transmission.

Figures 6(g) to 6(i) illustrate the transmission performance of the 10Gb/s NRZ signal when the transmission distance and splitting ratio are both extended to 60km and 1:64.

Fig. 6(i) illustrates the eye diagram in the following situation, where the proposed TWDM-PON system is used, which is configured at the ONU side with a DML transmitter driven by a high bias current and a modulation current with a lower amplitude, and at the receiver of the OLT side uses an AWG according to an embodiment of the present disclosure. As shown in Fig.6(i), the eye diagram is totally open, and thus the error free long distance transmission can be accomplished.

For the two situations where the conventional TWDM-PON is used and the AWG according to the embodiment of the present disclosure is not used, the eye diagrams of Figs. 6(i) and 6(h) are totally closed, and thus the transmission will produce error and no BER can be measured.

Through the simulation from Figs.6(a) to 6(i), the embodiment of the present disclosure can accomplish a long reach and precise 40Gb/s symmetric TWDM-PON system when using a low speed and low cost 2.5Gb/s DML and an AWG according to an embodiment of the present disclosure.

When the transmission distance and the splitting ratio are reduced, the scheme of the embodiment according to the present disclosure can further accomplish a higher rate uplink transmission. Figure 7 illustrates eye diagrams and BER diagrams under the respective condition when the bit rate is 20Gb/s and 30Gb/s according to an embodiment of the present disclosure.

As shown in column b in Fig.7, when the bit rate is increased to 20Gb/s per wavelength and the splitting ratio is 1:32, if the proposed symmetric TWDM-PON system is used, which is configured at the ONU side with a DML transmitter driven by a high bias current and a modulation current with a lower amplitude and at the receiver of the OLT side uses an AWG according to an embodiment of the present disclosure, the clearly opened eye diagram is obtained for the transmission distance 20km, 40km and 60km. And the corresponding BER is 3.3 × 10⁻¹⁵, 1.6 × 10⁻⁹ and 1 × 10⁻⁵ respectively, which are in the approved range of the forward error correction. By contrast, if the AWG according to the embodiment of the disclosure is not used, error would be generated (seen in column a in Fig.7).

Further, as shown in column d in Fig.7, when the bit rate is further increased to 30Gb/s per wavelength, in the situation where the transmission length is 20km and the splitting ratio is 1:32, a clear eye diagram can also be obtained and the BER is 4×10⁻⁸. Thus, a higher bit rate transmission can be accomplished with the AWG according to the embodiment of the present disclosure and the DML driven according to the embodiment of the present disclosure.

It shall be appreciated that the foregoing embodiments are merely illustrative but will not limit the invention. Any technical solutions without departing from the scope of invention, including that different technical features, methods appearing in different embodiments are used to combine to advantage. Further, any reference numerals in the claims cannot be recognized as limiting the related claims; the term "comprise" will not preclude another apparatus or step which does not appear in other claims or the description.

## Claims

1. A transmitter for an optical network unit, comprising:
a 2.5Gb/s direct modulation laser, for generating an uplink optical signal;
wherein the direct modulation laser is driven by a modulation current and a bias current, and the bias current is configured to be greater than a threshold current of the direct modulation laser, and an amplitude of the modulation current is configured such that a difference between a frequency of 1 bit and a frequency of 0 bit of the uplink optical signal is a half of a transmission rate of the uplink optical signal.

2. The transmitter according to claim 1, wherein the direct modulation laser comprises a distributed feedback laser or a distributed Bragg reflector.

3. The transmitter according to claim 1, wherein the bias current is configured to be at least three times of the threshold current of the direct modulation laser.

4. The transmitter according to claim 3, wherein the bias current is configured to be three to five times of the threshold current of the direct modulation laser.

5. The transmitter according to claim 1, wherein data carried by the modulation current is in an On-Off Keying format.

6. The transmitter according to claim 1, wherein the amplitude of the modulation current is configured based on physical parameters of the direct modulation laser.

7. A receiver (11) for an optical line terminal (10), comprising:
an arrayed waveguide grating (104); and
N receiving units (Rx1-Rx4);
wherein the arrayed waveguide grating (104) adapted to equalize an uplink optical signal, and to transmit N uplink multiple wavelength optical signals to the N receiving (Rx1-Rx4) respectively, wherein the uplink optical signal is generated by a 2.5Gb/s direct modulation laser; and
wherein a center frequency of each of N pass-bands of the arrayed waveguide grating (104) has an offset with respect to a frequency of a corresponding uplink multiple wavelength signal, and a 3dB bandwidth of each of the N pass-bands of the arrayed waveguide grating (104) is in a range of 17GHz to 33GHz.

8. The receiver (11) according to claim 7, wherein the 3dB bandwidth of each of the N pass-bands of the arrayed waveguide grating (104) is 25GHz.

9. The receiver (11) according to claim 7, wherein the offset between the center frequency of each of the N pass-bands of the arrayed waveguide grating (104) and the frequency of the corresponding uplink multiple wavelength optical signal is in a range of 25GHz to 35GHz.

10. The receiver (11) according to claim 9, wherein the offset is 30GHz.

11. The receiver (11) according to claim 7, wherein N equals to 4 or 8, and/or an order of a filter of each of the N pass-bands of the arrayed waveguide grating (104) is at least 2.

12. The receiver (11) according to claim 7, wherein the receiver further comprises: an optical amplifier (105), for amplifying the uplink optical signal and outputting it to the arrayed waveguide grating (104)

13. The receiver (11) according to claim 7, wherein the direct modulation laser is adapted to be driven by a modulation current and a bias current, and the bias current is configured to be greater than a threshold current of the direct modulation laser, and an amplitude of the modulation current is configured such that a difference between a frequency of 1 bit and a frequency of 0 bit of the uplink optical signal is a half of a transmission rate of the uplink optical signal.

14. An optical network unit (ONU1-ONUn), comprising:
a transmitter according to anyone of claims 1 to 6;
a receiver; and
a wavelength division multiplexer (201) connected with the transmitter and the receiver respectively.

15. An optical line terminal (10), comprising:
a receiver (11) according to anyone of claims 7 to 13;
a transmitter; and
a wavelength division multiplexer (103) connected with the transmitter and the receiver (11) respectively.

## Patentansprüche

1. Sender für eine optische Netzeinheit, der Folgendes umfasst:
einen Direktmodulationslaser mit 2,5 GB/s zum Erzeugen eines optischen Uplink-Signals;
wobei der Direktmodulationslaser durch einen Modulationsstrom und einen Ruhestrom angesteuert wird und der Ruhestrom so konfiguriert ist, dass er größer als ein Schwellenstrom des Direktmodulationslasers ist, und eine Amplitude des Modulationsstroms derart konfiguriert ist, dass eine Differenz zwischen einer Frequenz von 1 Bit und einer Frequenz von 0 Bit des optischen Uplink-Signals einer Hälfte einer Übertragungsrate des optischen Uplink-Signals entspricht.

2. Sender nach Anspruch 1, wobei der Direktmodulationslaser einen Laser mit verteilter Rückkopplung oder einen verteilten Bragg-Reflektor umfasst.

3. Sender nach Anspruch 1, wobei der Ruhestrom so konfiguriert ist, dass er mindestens dem Dreifachen des Schwellenstroms des Direktmodulationslasers entspricht.

4. Sender nach Anspruch 3, wobei der Ruhestrom so konfiguriert ist, dass er dem Drei- bis Fünffachen des Schwellenstroms des Direktmodulationslasers entspricht.

5. Sender nach Anspruch 1, wobei Daten, die durch den Modulationsstrom geführt werden, einem Format mit Ein/Aus-Tastung entsprechen.

6. Sender nach Anspruch 1, wobei die Amplitude des Modulationsstroms basierend auf physikalischen Parametern des Direktmodulationslasers konfiguriert wird.

7. Empfänger (11) für ein optisches Leitungsendgerät (10), der Folgendes umfasst:
ein Wellenleitergitter-Array (104); und
N Empfangseinheiten (Rx1-Rx4);
wobei das Wellenleitergitter-Array (104) dafür ausgelegt ist, ein optisches Uplink-Signal zu entzerren bzw. N optische Uplink-Signale mit mehreren Wellenlängen an die N Empfangseinheiten (Rx1-Rx4) zu senden, wobei das optische Uplink-Signal durch einen Direktmodulationslaser mit 2,5 GB/s erzeugt wird; und
wobei eine Mittenfrequenz jedes der N Durchlassbänder des Wellenleitergitter-Arrays (104) einen Versatz bezüglich einer Frequenz eines entsprechenden optischen Uplink-Signals mit mehreren Wellenlängen aufweist, und eine 3 dB-Bandbreite jedes der N Durchlassbänder des Wellenleitergitter-Arrays (104) in einem Bereich von 17 GHz bis 33 GHz liegt.

8. Empfänger (11) nach Anspruch 7, wobei die 3 dB-Bandbreite jedes der N Durchlassbänder des Wellenleitergitter-Arrays (104) 25 GHz entspricht.

9. Empfänger (11) nach Anspruch 7, wobei der Versatz zwischen der Mittenfrequenz jedes der N Durchlassbänder des Wellenleitergitter-Arrays (104) und der Frequenz des entsprechenden optischen Uplink-Signals mit mehreren Wellenlängen in einem Bereich von 25 GHz bis 35 GHz liegt.

10. Empfänger (11) nach Anspruch 9, wobei der Versatz 30 GHz entspricht.

11. Empfänger (11) nach Anspruch 7, wobei N gleich 4 oder 8 ist und/oder eine Ordnung eines Filters jedes der N Durchlassbänder des Wellenleitergitter-Arrays (104) mindestens zwei beträgt.

12. Empfänger (11) nach Anspruch 7, wobei der Empfänger ferner Folgendes umfasst:
einen optischen Verstärker (105) zum Verstärken des optischen Uplink-Signals und zum Ausgeben dieses an das Wellenleitergitter-Array (104).

13. Empfänger (11) nach Anspruch 7, wobei der Direktmodulationslaser dafür ausgelegt ist, durch einen Modulationsstrom und einen Ruhestrom angesteuert zu werden, und der Ruhestrom konfiguriert ist, größer als ein Schwellenstrom des Direktmodulationslasers zu sein, und eine Amplitude des Modulationsstroms derart konfiguriert ist, dass eine Differenz zwischen einer Frequenz von 1 Bit und einer Frequenz von 0 Bit des optischen Uplink-Signals einer Hälfte einer Übertragungsrate des optischen Uplink-Signals entspricht.

14. Optische Netzeinheit (ONU1-ONUn), die Folgendes umfasst:
einen Sender nach einem der Ansprüche 1 bis 6;
einen Empfänger; und
einen Wellenlängenmultiplexer (201), der mit dem Sender bzw. dem Empfänger verbunden ist.

15. Optisches Leitungsendgerät (10), das Folgendes umfasst:
einen Empfänger (11) nach einem der Ansprüche 7 bis 13;
einen Sender; und
einen Wellenlängenmultiplexer (103), der mit dem Sender bzw. dem Empfänger (11) verbunden ist.

## Revendications

1. Émetteur pour une unité de réseau optique, comprenant :
un laser à modulation directe de 2,5 Gb/s, pour générer un signal optique de liaison montante ;
le laser à modulation directe étant piloté par un courant de modulation et un courant de polarisation, et le courant de polarisation étant configuré pour être supérieur à un courant seuil du laser à modulation directe, et une amplitude du courant de modulation étant configurée de telle sorte qu'une différence entre une fréquence de 1 bit et une fréquence de 0 bit du signal optique de liaison montante est la moitié d'une vitesse de transmission du signal optique de liaison montante.

2. Émetteur selon la revendication 1, le laser à modulation directe comprenant un laser à rétroaction répartie ou un réflecteur de Bragg réparti.

3. Émetteur selon la revendication 1, le courant de polarisation étant configuré pour être au moins trois fois supérieur au courant seuil du laser à modulation directe.

4. Émetteur selon la revendication 3, le courant de polarisation étant configuré pour être trois à cinq fois le courant seuil du laser à modulation directe.

5. Émetteur selon la revendication 1, les données portées par le courant de modulation étant dans un format de modulation tout ou rien (On-Off Keying).

6. Émetteur selon la revendication 1, l'amplitude du courant de modulation étant configurée sur la base de paramètres physiques du laser à modulation directe.

7. Récepteur (11) pour un terminal de ligne optique (10), comprenant :
un réseau de guides d'ondes en réseau (104) ; et
N unités réceptrices (R×1-R×4) ;
le réseau de guides d'ondes en réseau (104) étant adapté pour égaliser un signal optique de liaison montante, et
pour transmettre N signaux optiques à longueurs d'onde multiples de liaison montante à N récepteurs (R×1-R×4) respectivement, le signal optique de liaison montante étant généré par un laser à modulation directe de 2,5 Gb/s ; et
une fréquence centrale de chacune des N bandes passantes du réseau de guides d'ondes en réseau (104) ayant un décalage par rapport à une fréquence d'un signal de longueur d'onde multiple de liaison montante correspondant, et une largeur de bande de 3 dB de chacune des N bandes passantes du réseau de guides d'ondes en réseau (104) étant dans une plage de 17 GHz à 33 GHz.

8. Récepteur (11) selon la revendication 7, la largeur de bande de 3 dB de chacune des N bandes passantes du réseau de guides d'ondes en réseau (104) étant de 25 GHz.

9. Récepteur (11) selon la revendication 7, le décalage entre la fréquence centrale de chacune des N bandes passantes du réseau de guides d'ondes en réseau (104) et la fréquence du signal optique à longueurs d'onde multiples de liaison montante correspondante étant dans une plage de 25 GHz à 35 GHz.

10. Récepteur (11) selon la revendication 9, le décalage étant de 30 GHz.

11. Récepteur (11) selon la revendication 7, N étant égal à 4 ou 8, et/ou un ordre d'un filtre de chacune des N bandes passantes du réseau de guides d'ondes en réseau (104) étant au moins 2.

12. Récepteur (11) selon la revendication 7, le récepteur comprenant en outre :
un amplificateur optique (105), pour amplifier le signal optique de liaison montante et le fournir au réseau de guides d'ondes en réseau (104).

13. Récepteur (11) selon la revendication 7, le laser à modulation directe étant adapté pour être piloté par un courant de modulation et un courant de polarisation, et le courant de polarisation étant configuré pour être supérieur à un courant seuil du laser à modulation directe, et une amplitude du courant de modulation étant configurée de telle sorte qu'une différence entre une fréquence de 1 bit et une fréquence de 0 bit du signal optique de liaison montante est une moitié d'une vitesse de transmission du signal optique de liaison montante.

14. Unité de réseau optique (ONU1-ONUn), comprenant :
un émetteur selon l'une quelconque des revendications 1 à 6 ;
un récepteur, et
un multiplexeur à division de longueur d'onde (201) connecté respectivement à l'émetteur et au récepteur.

15. Terminal de ligne optique (10), comprenant :
un récepteur (11) selon l'une quelconque des revendications 7 à 13 ;
un émetteur ; et
un multiplexeur à division de longueur d'onde (103) connecté respectivement à l'émetteur et au récepteur (11).
